# EUROPEAN PATENT APPLICATION

(11) **EP 1 018 829 A1**
(43) Date of publication of application: **12.07.2000**
(21) Application number: 99115900.5
(22) Date of filing: 12.08.1999
(51) Int. Cl.: H04L 29/06, H04L 12/66

(54) **Mobile agent servicing method**

(30) Priority: 08.01.1999 JP 328399
(71) Applicant: MATSUSHITA ELECTRIC INDUSTRIAL CO., LTD., Kadoma-shi, Osaka 571-0050 (JP)
(72) Inventor: Hamamoto, Kazutomo, Sagamihara-shi, Kanagawa 229 (JP)
(74) Representative: Grünecker, Kinkeldey, Stockmair & Schwanhäusser Anwaltssozietät

(57) **Abstract**

A mobile communications network includes mobile terminals 1, such as intelligent portable cellular phones; a mobile communications network 2 such as a Personal Digital Cellular (PDC) network or a Personal Handy Phone System (PHS); a gateway 3 for converting protocols; the Internet 4; content web servers 5; and a stationary terminal 6 such as a desk-top personal computer. Personal data (PIM data or PIM information) about all the terminal users are stored in the gateway 3. A CPU of the gateway 3 can manage PIM data about all the terminal users and check the contents of the PIM data. Both the mobile terminal 1 and the stationary terminal 6 can access and update the PIM data. The CPU of the gateway 3 constantly monitors the contents of the PIM data and can retrieve and fetch desired data from the content web servers 5 in response to requests issued by an indefinite number of users.

## Description

### BACKGROUND OF THE INVENTION

### 1. Field of the Invention

The present invention relates to a mobile agent servicing method, and more particularly, to automatic delivery of desired information to an indefinite number of users.

### 2. Description of the Related Art

Personal information such as a directory or a schedule; i.e., PIM (Personal information manager) data, is usually stored in a terminal such as the person's own desk-top personal computer, is held by the person himself, or is stored on the person's relevant web site. Consequently, most people cannot automatically acquire desired information while mobile. A great amount of PIM data are not collected in one place; personal data about an indefinite number of people; i.e., PIM data, cannot be collectively managed by means of a single CPU. As a result, the user cannot automatically acquire desired data while moving.

If a certain user desires certain data, the user is required to make a conscious effort to access a web server to thereby fetch desired data. Desired data cannot be automatically delivered to such a user.

Further, if the user attempts to acquire data, such as that mentioned previously, while outdoors, even when the user has a mobile terminal, the user is required to access a web server by means of the mobile terminal. Further, before going outdoors, the user must copy to the mobile terminal the PIM data stored only in his desk-top personal computer. Although such a data transfer operation is very laborious, it has been the only means enabling the user to access desired information outdoors, because automatic delivery of desired information has conventionally not been available.

### SUMMARY OF THE INVENTION

To solve the foregoing problems, the object of the present invention is to enable automatic delivery of desired data to an indefinite number of people and to offer data to the user while outdoors or mobile without the requirement to copy PIM data from the user's desk-top personal computer to a mobile terminal in advance, neither feature having ever been realized hitherto.

To achieve the object, the present invention provides a mobile agent servicing method for use in a mobile communications network system including mobile terminals, a mobile communications network wirelessly connecting the mobile terminals together, a gateway for connecting the mobile communications network to the Internet, and content web servers connected to the Internet, wherein
the data required by a user are retrieved from the content web server and can be automatically offered to the user on the move, by a CPU of the gateway checking the contents of personal data about all the terminal users stored in the gateway.

According to one aspect of the present invention, there is provided a mobile agent servicing method for use in a mobile communications network system including mobile terminals, a mobile communications network wirelessly connecting the mobile terminals together, a gateway for connecting the mobile communications network to the Internet, and content web servers connected to the Internet, wherein
the data required by a user are retrieved from the content web server and can be automatically offered to the user on the move, by a CPU of the gateway checking the contents of personal data about all the terminal users stored in the gateway. The mobile agent servicing method yields the advantage of eliminating the need to access a web by troublesome operation of a terminal such as a desktop personal computer and eliminating the need for the user to copy PIM data to a mobile terminal from a desktop personal computer before going outdoors.

Preferably, personal data are automatically offered to the user from the personal data stored in the gateway, through operation of a terminal such as a desk-top personal computer, as well as through operation of the mobile terminal. The mobile agent servicing method also yields an advantage of the ability to effect automatic delivery of PIM data by way of the desk-top personal data.

The present disclosure relates to the subject matter contained in Japanese patent application No. Hei. 11-3283 (filed on January 8, 1999) which is expressly incorporated herein by reference in its entirely.

### BRIEF DESCRIPTION OF THE DRAWINGS

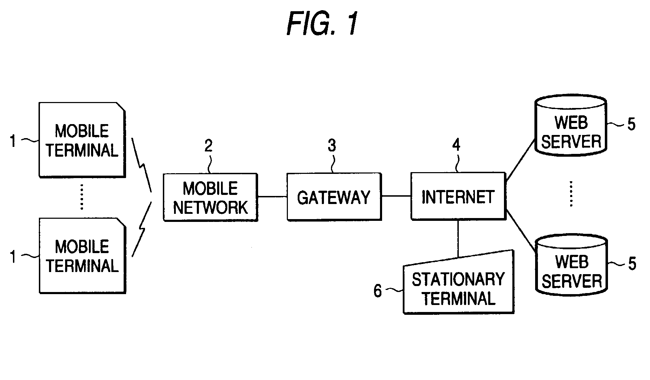

FIG. 1 is a descriptive view for describing a mobile agent servicing method according to one embodiment of the present invention.

### DETAILED DESCRIPTION OF THE PREFERRED EMBODIMENTS

A preferred embodiment of the present invention will be describe hereinbelow by reference to the accompanying drawing.

FIG. 1 is a descriptive view for describing a mobile agent servicing method according to one embodiment of the present invention. In FIG. 1, a mobile communications network embodying the mobile agent servicing method according to the present invention comprises mobile terminals 1, such as intelligent portable cellular phones; a mobile communications network 2 such as a Personal Digital Cellular (PDC) network or a Personal Handy Phone System (PHS); a gateway 3 for converting protocols; the Internet 4; content web servers 5; and a stationary terminal 6 such as a desk-top personal computer.

Personal data (PIM data or PIM information) about all the terminal users are stored in the gateway 3. A CPU of the gateway 3 can manage PIM data about all the terminal users and check the contents of the PIM data.

Both the mobile terminal 1 and the stationary terminal 6 can access and update the PIM data. The CPU of the gateway 3 constantly monitors the contents of the PIM data and can retrieve and fetch desired data from the content web servers 5 in response to requests issued by an indefinite number of users.

For example, in the case that PIM data regarding a business trip to Hiroshima to be taken by a certain user on a certain day are stored in the memory of the gateway 3 by means of the mobile terminal 1, the CPU of the gateway 3 immediately retrieves data relevant to Hiroshima by accessing the content web servers 5 upon detection of storage of the PIM data and offers the thus-retrieved data to the user as ticket information.

The present invention enables automatic delivery of desired data to an indefinite number of users, a feature which has never been realized hitherto, by collection of PIM data in the center of the network. Consequently, the present invention yields an advantage of eliminating the need for the user to copy PIM data to a mobile terminal from his personal desk-top computer before going outdoors.

As is evident from the above description, PIM data are not stored in the terminal *per se*, but personal data (or PIM data) about terminal users are stored in the gateway to which the terminals are connected. Further, the user can update the PIM data by way of the terminal connected to the gateway, thereby enabling centralized management of PIM data. The CPU of the gateway checks the contents of the PIM data and automatically retrieves desired data from the content web servers, thereby enabling automatic delivery of the desired data. As a result, desired data are automatically delivered to the user without requiring a conscious effort on the part of the user. Consequently, efficiency of business activities is improved.

## Claims

1. A mobile agent servicing method for use in a mobile communications network system including mobile terminals, a mobile communications network wirelessly connecting the mobile terminals together, a gateway for connecting the mobile communications network to the Internet, and content web servers connected to the Internet, said method comprising the steps of:
retrieving the data required by a user from the content web server; and
automatically offering the data to the user on the move, by a CPU of the gateway checking the contents of personal data about all the terminal users stored in the gateway.

2. The mobile agent servicing method as defined in claim 1, wherein personal data are automatically offered to the user from the personal data stored in the gateway, through operation of a terminal such as a desk-top personal computer, as well as through operation of the mobile terminal.
